# EUROPÄISCHE PATENTSCHRIFT

(11) **EP 2 949 930 B1**
(45) Veröffentlichungstag und Bekanntmachung des Hinweises auf die Patenterteilung: **23.08.2017**
(21) Anmeldenummer: 15001487.6
(22) Anmeldetag: 18.05.2015
(51) Int. Cl.: F04B 15/02, F04B 53/14, F16J 1/00, F16J 1/09, B65B 3/32

(54) **KOLBEN FÜR EINE DOSIERPUMPE**
PISTON FOR A DOSING PUMP
PISTON POUR UNE POMPE DE DOSAGE

(30) Priorität: 19.05.2014 DE 102014007221
(43) Veröffentlichungstag der Anmeldung: 02.12.2015
(73) Patentinhaber: Ammann, Rainer, 86399 Bobingen (DE)
(72) Erfinder: Ammann, Rainer, 86399 Bobingen (DE)
(74) Vertreter: Lemke, Jörg-Michael

(56) Entgegenhaltungen:
- DE-A1- 2 354 771
- DE-A1- 3 010 010
- DE-U1- 8 814 480
- DE-U1- 8 908 291
- US-A- 2 600 516

## Beschreibung

Die Erfindung betrifft einen Kolben für eine Dosierpumpe zum Dosieren von fließfähigen Füllgut, insbesondere Nahrungsmitteln unter sterilen Bedingungen, in Form einer Kolben-Zylinder-Einheit mit koaxialer metallischer Kolbenstange und metallischem Kolbenkern als Innenteil, bei welcher Einheit ein radial erweiterter Bereich des Kolbens als Außenteil einen kegelstumpfförmigen Bund aus Kunststoff mit einer ringförmigen Dichtlippe aufweist, die mit ihrem größten Durchmesser an der Zylinderinnenfläche des Zylinders der Kolben-Zylinder-Einheit hermetisch abdichtend hin und her zu gleiten bestimmt ist, wobei der die Dichtlippe aufweisende Außenteil des Kolbens unter Zwischenlage einer Feder den Kolbenkern umgibt.
Derartige Dosierpumpen dienen dem Dosieren beispielsweise von sterilen Nahrungsmitteln in verschiedenste Behälter. Der Kolbenkern und die Kolbenstange werden regelmäßig aus Edelstahl gefertigt. Eine solche Dosierpumpe ist z.B. aus DE-3010010-A1 bekannt. Es ist nun ein Kolben dieser Art bekannt, welcher aus einem einstückigen Kompositstoff mit den Bestandteilen Edelstahl, Gummi und PTFE-Compound besteht, wobei der Kolbenkern von einem anliegenden inneren Mantel aus Gummi als Feder umgeben ist, den wiederum ein äußerer Mantel aus PTFE (Polytetrafluorethylene) anliegend umschließt, welcher die Dichtlippe aufweist. Dabei soll der innere Gummi dem äußeren PTFE eine radiale Federung ermöglichen, derart, dass derselbe mit der Dichtlippe federnd an der Zylinderinnenfläche anliegt. Gleichwohl verfügt hier die Dichtlippe trotz der Gummiverwendung über eine relativ geringe Nachgiebigkeit, so dass bereits der Einbau des Kolbens in den Zylinder zwecks Herstellung der Kolben-Zylinder-Einheit, bei welchem Einbau der Durchmesser der Dichtlippe ja etwas verringert werden muss, um in den Zylinder eingeführt werden zu können, schwierig ist und nicht selten zu einer Beschädigung der Dichtlippe führt. Dies auch vor allem deshalb, weil durch die vorhergehende Sterilisation und die sich daraus ergebende Wärmeausdehnung einerseits und Erhöhung des Innendrucks andererseits eine Durchmesservergrößerung entstanden ist. Alles dies lässt dann den bekannten Kolben zu Ausschuss werden und verbietet seine Verwendung a priori. Außerdem ergibt sich selbst dann, wenn ein einwandfreier Einbau gelungen sein sollte, anschließend ein erhöhter Verschleiß durch erhöhte Reibung,

Ferner ist die Lebensdauer der Dichtlippe des bekannten Kolbens verhältnismäßig kurz, da er aus den genannten Gründen nur über eine relativ geringe Möglichkeit verfügt, sich radial zu erweitern und den durch die erhebliche Reibung an der Zylinderinnenfläche zwangsläufig auftretenden Abrieb auszugleichen. Durch die zu Beginn recht hohe Anpressung der Dichtlippe des bekannten Kolbens tritt ferner zuweilen der nachteilige sogenannte Slip-Stick-Effekt auf, nämlich eine Stotterbewegung des Kolbens relativ zum Zylinder infolge eines wiederholten Übergangs von Haft- zu Gleitreibung bzw. umgekehrt zwischen den beiden, was zu einer stoßhaften Dosierung des Füllguts mit nachteiliger Spritzerbildung führt. Da diese bekannten Kolben nun einmal einstückig ausgebildet sind, ist somit ein relativ häufiger Austausch derselben in ihrer Gesamtheit erforderlich, was mit erheblichen Kosten verbunden ist.

Die der Erfindung zugrunde liegende Aufgabe wird darin gesehen, einen Kolben der genannten Art zu schaffen, der einerseits die Möglichkeit eines Druckausgleichs in der Sterilisationsphase seines Einbaus bietet und damit eine Durchmesservergrößerung zum größten Teil vermeidet, der andererseits die Möglichkeit der Feststellung eines Undichtgewordenseins des Kolbens bietet, und der schließlich insgesamt unter Vermeidung der oben erwähnten Nachteile eine höhere Lebensdauer aufweist, d. h. in der Lage ist, über einen längeren Zeitraum als der bekannte Kolben seine Funktion zu erfüllen

Diese Aufgabe wird erfindungsgemäß gelöst durch die Merkmale des Patentanspruchs 1.

Vorteilhaft kann nämlich bereits bei der ersten Sterilisation des Kolbens der gerade erst eingebauten Dosierpumpe und vor dem Beginn der eigentlichen Funktion der Dosierpumpe durch Ansaugen und Abfüllen einer Produktdosis des abzufüllenden Füllguts eine Kontrolle der einwandfreien Abdichtfunktion des Kolbens erfolgen. Befindet sich der Kolben nämlich in seiner Sterilisierstellung im oberen Raum des Zylinders der Dosierpumpe und wird er dem Sterilisierfluid in Form von Dampf oder Flüssigkeit ausgesetzt, dann würde eine eventuelle Undichtheit des Kolbens durch ein Austreten des Fluids aus der seitlichen Öffnung angezeigt. Ferner ist die erfindungsgemäße Ausgestaltung zur Feststellung einer Leckage des Kolbens auch noch insofern von Vorteil, als sie es ermöglicht, einen Druckausgleich in der Ausnehmung bzw. dem gesamten Hohlraum zwischen Innenteil und Außenteil zu bewirken, Somit lässt sich ein Überdruck z. B. bei den hohen Temperaturen einer Sterilisation abbauen, der den Durchmesser des Außenteils des Kolbens auftreiben könnte, wie auch ein Unterdruck bei Abfüllprodukten, die bei niedrigen Temperaturen abgefüllt werden müssen, der zu einer unerwünschten Verringerung des Durchmessers des Außenteils führen könnte.

In weiterer Ausgestaltung der Erfindung soll auch die Aufgabe gelöst werden, es zu vermeiden, dass der Kolben am Ende seiner Funktionsfähigkeit hinsichtlich einer zuverlässigen Abdichtung zwischen Kolben und Zylinderinnenfläche zur Gänze ausgetauscht werden muss, was einen erheblichen wirtschaftlichen Verlust zu bedeuten pflegt.

Hierzu ist der Kolben zweiteilig aus einem die Dichtlippe aufweisenden und den erweiterten Bereich bildenden gesonderten Außenteil aus Kunststoff und aus einem den Kolbenkern bildenden Innenteil aus Metall gebildet, welch letzterer im Wesentlichen kegelstumpfförmig ausgebildet ist und mit seinem im Durchmesser kleineren Ende voran in eine ihn aufnehmende rotationssymmetrische Ausnehmung des Außenteils eingesetzt ist. Diese Ausgestaltung bietet die Möglichkeit eines Austauschs lediglich des die Dichtlippe aufweisenden gesonderten Außenteils des Kolbens.

Somit wird insgesamt erreicht, dass die Dichtlippe sich einerseits beim Einbau des Kolbens in den Zylinder der Kolben-Zylinder-Einheit leichter radial nach innen verengen lässt und dabei ihre Beschädigung vermieden werden kann, und dass sie andererseits unter der Wirkung der Feder sich auch besonders gut radial nach außen erweitern kann und dadurch in der Lage ist, den beim Betrieb der Dosierpumpe über die Zeit entstehenden Abrieb an der Dichtlippe länger auszugleichen. Die erfindungsgemäße Dichtlippe verfügt somit über eine vergrößerte radiale Flexibilität. Ferner ist der Außenteil aus Kunststoff, vorzugsweise aus dem bekannten PTFE, ein gesondertes Verschleißteil und damit auswechselbar geworden, sodass nicht mehr der gesamte Kolben aus in der Regel im Wesentlichen Edelstahl ausgetauscht werden muss, wenn das Ende der Nutzungsdauer des Kolbens erreicht worden ist, vielmehr genügt ein Austausch des verhältnismäßig preiswerten gesonderten Außenteils, was eine ganz erhebliche Kostenersparnis erbringt, da der wesentlich teurere Innenteil weiter verwendet werden kann, weil er praktisch keinem Verschleiß unterliegt.

Die Erfindung und ihre sich aus den weiteren Unteransprüchen ergebenden vorteilhaften Ausgestaltungen sind im Folgenden an Hand eines in den Zeichnungen dargestellten Ausführungsbeispiels näher erläutert.

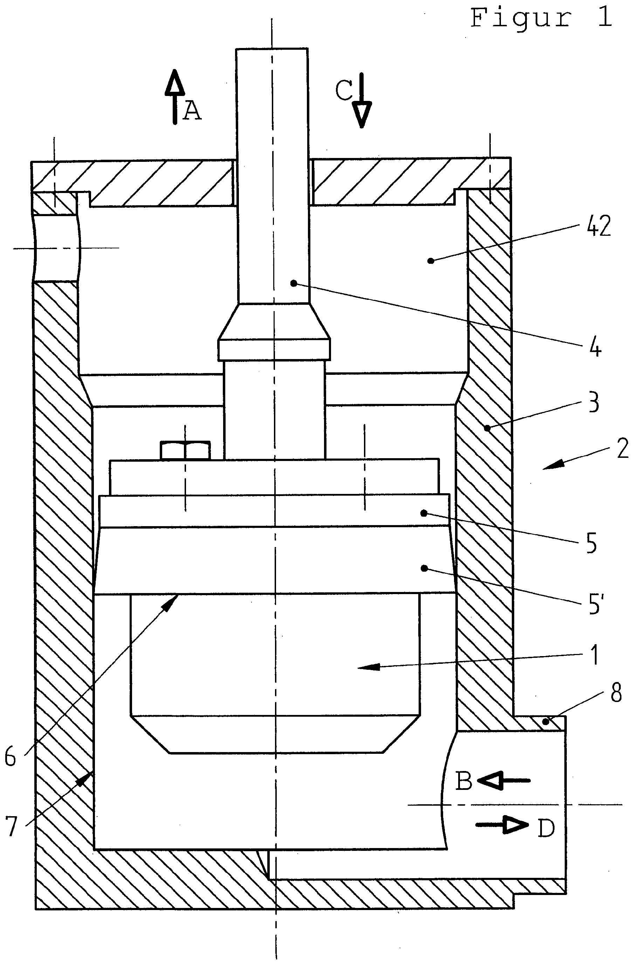

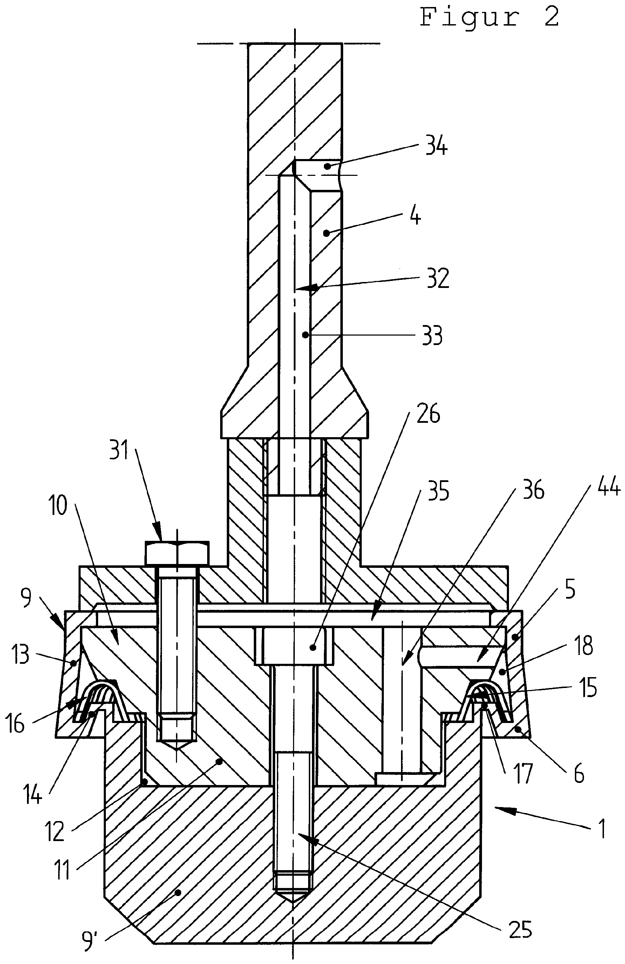

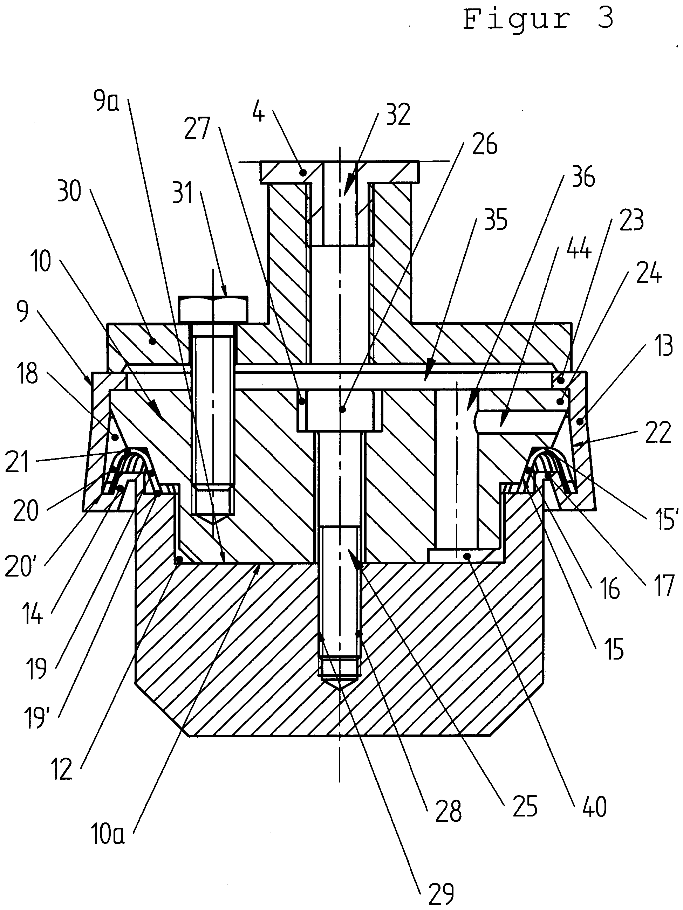

Es zeigt:
Fig. 1
   eine Dosierpumpe in Form einer Kolben-Zylinder-Einheit mit einem in Längsrichtung aufgeschnittenen Zylinder;
Fig. 2
   den Kolben mit seiner Kolbenstange nach Fig. 1 in einem Längsschnitt bei weggelassenem oberen Ende der Kolbenstange in einem gegenüber Fig. 1 vergrößertem Maßstab gemäß einer ersten Ausführungsform der Erfindung;
Fig. 3
   den Kolben gemäß Fig. 2 mit nur dem Ansatz seiner Kolbenstange in gegenüber der Fig. 2 vergrößertem Maßstab;
Fig. 4
   einen Ausschnitt aus Fig. 3 längs der dortigen Linie IV-IV in gegenüber der Fig. 3 vergrößertem Maßstab;
Fig. 5
   eine bevorzugte Ausführungsform der als Feder verwendeten Ringfeder in schaubildlicher Ansicht.

In Fig. 1 ist ein Kolben 1 für eine Dosierpumpe 2 zum Dosieren von fließfähigen Füllgut, insbesondere Nahrungsmitteln unter sterilen Bedingungen, dargestellt. Die Dosierpumpe 2 ist eine Kolben-Zylinder-Einheit, bestehend aus einem Kolben 1, einer koaxialen metallischen Kolbenstange 4 und einem Zylinder 3, wobei der Kolben 1 einen metallischen Kolbenkern als Innenteil 10 und eine radial erweiterte Kolbenführung 5 als Außenteil 9 aufweist, der einen kegelstumpfförmigen Bund 5' aus Kunststoff mit einer ringförmigen Dichtlippe 6 besitzt, die mit ihrem größten Durchmesser an der Zylinderinnenfläche 7 des Zylinders 3 der Kolben-Zylinder-Einheit hermetisch abdichtend hin und her zu gleiten bestimmt ist, wobei der die Dichtlippe 6 aufweisende Bereich des Außenteils 9 unter Zwischenlage einer Feder den Innenteil 10 umgibt.

Der die Dichtlippe 6 aufweisende Bereich des Kolbens 1 besteht aus einem Kunststoff, insbesondere aus PTFE (Polytetrafluorethylene).

Diese Dosierpumpe 2 saugt bei einer Bewegung des Kolbens 1 in Pfeilrichtung A eine bestimmte Menge an fließfähiger Füllgut aus einem nicht gezeigten Reservoir durch einen Ansaug- und Füllstutzen 8 in Pfeilrichtung B an. Bei einer anschließenden Bewegung des Kolbens 1 in Pfeilrichtung C wird diese Menge wieder durch den Ansaug- und Füllstutzen 8 in Pfeilrichtung D in einen nicht gezeigten Behälter abgegeben. Das dafür erforderliche Ventil mit seinen Wegen einerseits zum Reservoir und andererseits zum Behälter ist ebenfalls nicht gezeigt.

Wie die Fig. 2 und 3 zeigen, weist die Kolbenstange 4 eine koaxiale Durchbrechung 32 auf, die in der Kolbenstange 4 als Kanal 33 zu einer in Abstand vom Kolben 1 angeordneten Öffnung 34 zum Außenbereich hin führt, wobei diese Durchbrechung 32 mit einem scheibenförmigen radialen Hohlraum 35 zwischen Innenteil 10 und Außenteil 9 des Kolbens 1 verbunden ist, welcher Hohlraum 35 seinerseits über mindestens einen Durchlass 36 mit einem an die Dichtlippe 6 angrenzenden Ringraum 18 in Verbindung steht, derart, dass einerseits ein Druckausgleich zwischen Ringraum 18 und Öffnung 34 stattfinden kann, und dass andererseits bei einem Undichtwerden der Dichtlippe 6 durch einen Riss in ihr selber oder in einer der an sie angrenzenden Wände 13, 14 oder durch ihren mit der Zeit auftretenden Verschleiß das fließfähige Füllgut über den Ringraum 18 und den Kanal 33 aus dessen Öffnung 34 austreten und sichtbar werden kann, und dass die Feder eine in dem Ringraum angeordnete Feder ist.

Auf den durch diese Ausgestaltung ermöglichten Druckausgleich und dessen Vorteile wurde bereits hingewiesen. Ein zusätzlicher Vorteil des erfindungsgemäßen Kolbens 1 besteht darin, dass bereits bei der ersten Sterilisation des Kolbens 1 der gerade erst eingebauten Dosierpumpe 2 und vor dem Beginn der eigentlichen Funktion der Dosierpumpe 2 durch Ansaugen und Abfüllen einer Produktdosis der abzufüllenden Substanz bzw. des Füllguts eine Kontrolle der einwandfreien Abdichtfunktion des Kolbens 1 erfolgen kann. Befindet sich der Kolben 1 nämlich in seiner nicht gezeigten Sterilisierstellung oben im Raum 42 des Zylinders 3 der Dosierpumpe 2 (Fig. 1) und wird er dem Sterilisierfluid in Form von Dampf oder Flüssigkeit ausgesetzt, dann würde seine eventuelle Undichtheit durch ein Austreten des Fluids aus der seitlichen Öffnung 34 angezeigt.

Vorteilhaft besteht der Kolben 1 zweiteilig aus einem die Dichtlippe 6 aufweisenden und einen erweiterten Bereich 5 als Kolbenführung bildenden gesonderten Außenteil 9 aus Kunststoff und dem den Kolbenkern bildenden Innenteil 10 aus Metall, vorzugsweise aus Edelstahl, an dem die Kolbenstange 4 koaxial angeordnet ist, welcher Innenteil 10 im Wesentlichen kegelstumpfförmig ausgebildet ist und mit seinem im Durchmesser kleineren Ende 11 voran in eine ihn aufnehmende rotationssymmetrische Ausnehmung 12 des Außenteils 9 eingesetzt ist.

Dabei ist zweckmäßig die Ausnehmung 12 unter Bildung auch des Hohlraums 35 und des Ringraums 18 derart ausgehöhlt, dass die an die Dichtlippe 6 angrenzenden und den Ringraum 18 nach außen abschließenden Bereiche des Außenteils 9 eine im Wesentlichen axiale Wand 13 und eine im Wesentlichen radiale Wand 14 bilden, und wobei diese beiden Wände (13, 14) derart flexibel sind, dass die Dichtlippe (6) unter der Wirkung der in der zum Ringraum (18) gehörenden Ausnehmung (12) zwischen der an die Dichtlippe (6) angrenzenden axialen Wand (13) des Außenteils (9) und einer kegelstumpfförmigen Ringwandfläche (15) des Innenteils (10) einspannbaren Feder (16) radial sowohl nach außen vorspannbar als auch beim Einsetzen des Kolbens (1) in den Zylinder (3) der Kolben-Zylinder-Einheit unter der verengenden Wirkung der Zylinderinnenfläche (7) radial nach innen federnd nachgiebig ist. Dabei weist die sich radial erstreckende Wand 14 zweckmäßig mindestens eine in Umfangsrichtung umlaufende, sich in den Ringraum 18 hinein erstreckende und radial flexible Falte 17 auf, die nach Art eines Faltenbalges eine radiale Bewegung der Dichtlippe 6 erleichtert.

Die im Wesentlichen radiale Wand 14 mit ihrer hier zweckmäßigen einzigen Falte 17 lässt sich ausbilden, weil das freie Ende 9' des Außenteils 9 in seinem Durchmesser gegenüber dem Durchmesser der Dichtlippe 6 entsprechend verringert ist. Im vorliegenden Fall besteht die radiale Wand 14 praktisch nur aus der Falte 17.

Die Feder 16 ist in dem einen Teil der Ausnehmung 12 bildenden Ringraum 18 zwischen Innenteil 9 und Außenteil 10 angeordnet und ist hier beispielsweise eine Ringfeder. Sie weist einen umgekehrt U-förmigen axialen Querschnitt mit radial inneren Stegen 19 und radial äußeren Stegen 20 und Stegverbindungen 21 auf. Die radial inneren Stege 19 greifen an der kegelstumpfförmigen Ringwandfläche 15 des Innenteils 10 und die radial äußeren Stege 20 greifen an der im Wesentlichen axial verlaufenden und an die Dichtlippe 6 angrenzenden Innenfläche 22 der axialen Wand 13 des Außenteils 9 an. Die Vorspannung der Ringfeder 16 ist durch koaxiale Verlagerung des Innenteils 10 in das Außenteil 9 hinein erzeugbar. Dabei halten zwei Flächen die Ringfeder 16 in Position, nämlich eine Bundfläche 15', die Druck von oben ausübt, und die kegelstumpfförmige Ringwandfläche 15 als Schrägfläche, welche letztlich für die Vorspannung der Dichtlippe 6 verantwortlich ist.

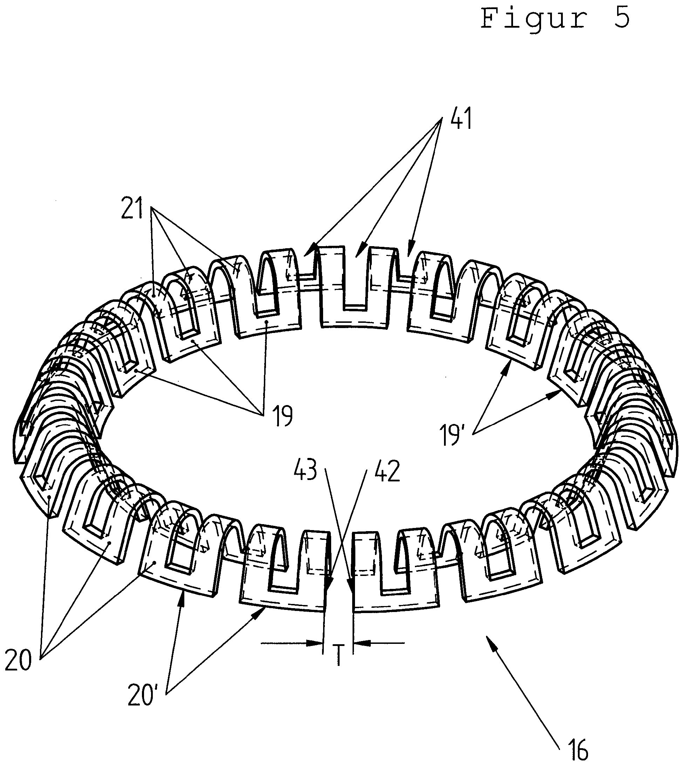

Die in Fig. 5 dargestellte vorzugsweise Ausführungsform der Feder 16 weist mindestens einen Durchgang 41 auf, derart, dass bei einem Undichtwerden der Dichtlippe 6 ein Durchtritt des nicht gezeigten Füllguts zu mindestens einem Durchlass 36 zwischen Hohlraum 35 und einem Anschlusskanal 40 gewährleistet ist.

Wie die Fig. 5 zeigt, weist diese Ausführungsform der Feder 16 in Umfangsrichtung und in Abstand voneinander eine Mehrzahl von Durchgängen 41 auf, die sich über den gesamten Umfang der Feder 16 erstrecken.

Außerdem besitzt die Feder 16 in diesem Fall in Umfangsrichtung zwei einander gegenüberliegende und einen Abstand T voneinander aufweisende Enden 42 und 43, wobei dieser Abstand T ebenfalls einen Durchgang bildet.

Die Durchgänge 41 sind hier Ausschnitte, die sich von den Stegverbindungen 21 des U zu den Rändern 19' und 20' der Stege 19, 20 der Feder 16 hin erstrecken.

Dabei können vorteilhaft zur Steigerung der Wirksamkeit der Ringfeder 16 die Stege 19 und 20 zu ihren Rändern 19' und 20' hin mit einer Spreizung versehen werden, wobei nur die Ränder 20' des radial äußeren Stegs 20 an der Innenfläche 22 der axialen Wand 13 anliegen und dabei Linienberührung aufweisen, während die radial inneren Stege 19 flächig an der kegelstumpfförmigen Ringwandfläche 15 des Innenteils 10 anliegen.

Ein Slip-Stick-Effekt zwischen Dichtlippe 6 und Zylinderinnenfläche 7 lässt sich beim Gegenstand der Erfindung durch Auswahl einer passenden Federstärke der Ringfeder 16 und damit durch eine Variation des Anpressdruckes vermeiden, denn beispielsweise bei der Abfüllung eines hochviskosen Füllguts mit geringerer Schmierwirkung lässt sich der Anpressdruck der Dichtlippe 6 gegen die Zylinderinnenfläche 7 durch Verringerung der Federstärke entsprechend geringer wählen.

Vorteilhaft weist das Außenteil 9 am oberen Rand seiner Ausnehmung 12 einen radial nach innen vorstehenden Bund 23 auf, der beim Einsetzen des Innenteils 10 in die Ausnehmung 12 aufweitbar ist, derart, dass der Bund 23 nach dem Einsetzen des Innenteils 10 über dessen oberen Rand 24 schnappbar ist und das Innenteil 10 im Außenteil 9 hält. Dabei sind die Abmessungen derart, dass die Endfläche 10a des Innenteils 10 an der inneren Endfläche 9a des Außenteils 9 anliegt.

Bei der gezeigten Ausführungsform sind Innenteil 10 und Außenteil 9 mittels einer Verschraubung miteinander verbunden. Diese Verschraubung besteht hier aus einer zentralen Schraube 25, welche das Innenteil 10 durchdringt, mit ihrem Kopf 26 in einer Eintiefung 27 des Innenteils 10 anliegt und mit ihrem Gewindeteil 28 in ein koaxiales Sackgewinde 29 des Außenteils 9 eingeschraubt ist.

Die Kolbenstange 4 besitzt hier eine koaxiale Endplatte 30, die mit dem Innenteil 10 fest verbunden ist, wobei die Verbindung hier aus einer Verschraubung mit mindestens einer Schraube 31 besteht.

Der Hohlraum 35 ist bei der gezeigten Ausführungsform zwischen Endplatte 30 und Innenteil 10 ausgebildet und im Innenteil 10 ist mindestens ein Durchlass 36 zwischen diesem Hohlraum 35 und einem Anschlusskanal 40 in einer Stirnseite 10a des Innenteils 10 vorgesehen, welcher Anschlusskanal 40 auf diese Weise mit der Öffnung 34 verbunden ist, derart, dass ein Durchtritt zwischen dem Ringraum 18 der Ausnehmung 12 und der Öffnung 34 vorhanden ist.

Somit kann bei einem Undichtwerden der Dichtlippe 6 durch einen Riss in ihr selber oder in einer der angrenzenden Wände 13, 14, oder durch Verschleiß, das fließfähige Füllgut über den Ringraum 18 der Ausnehmung 12 an der Ringfeder 16 vorbei, durch den Anschlusskanal 40, den Durchlass 36, die Hohlkammer 35, den Kanal 33 und die Öffnung 34 austreten und sichtbar werden. Dabei ist die marktgängige Ringfeder 16 kein Hindernis, wie erläutert.

Durch Variieren der Art und Form der Durchgänge 41 kann außerdem die Flexibilität und Federkraft der Ringfeder 16 verändert und an unterschiedliche Füllmedien angepasst werden.

Es ist ersichtlich, dass Außenteil 9 und Innenteil 10 sich nur in zwei Bereichen berühren, nämlich zum einen im Bereich der Endfläche 10a des Innenteils 10, die an der inneren Endfläche 9a des Außenteils 9 anliegt, und zum anderen im Bereich des Bundes 23 des Außenteils 9, der den oberen Rand 24 des Innenteils 10 übergreift. Zwischen diesen beiden Bereichen wahren das Außenteil 9 und das Innenteil 10 einen Abstand voneinander, welcher die offene Verbindung zwischen dem Ringraum 18 und der Öffnung 34 sicherstellt, derart, dass in der erläuterten Weise einerseits ein Druckausgleich und andererseits eine Leckanzeige gewährleistet ist.

Dabei ist bei der gezeigten und bevorzugten Ausführungsform das Innenteil 10 in Richtung auf seine Endfläche 10a hin stufenförmig nach innen abgeschrägt, um die kegelstumpfförmige Innenwandfläche 15 und die Bundfläche 15' für die Einspannung der Ringfeder 16 zu bilden.

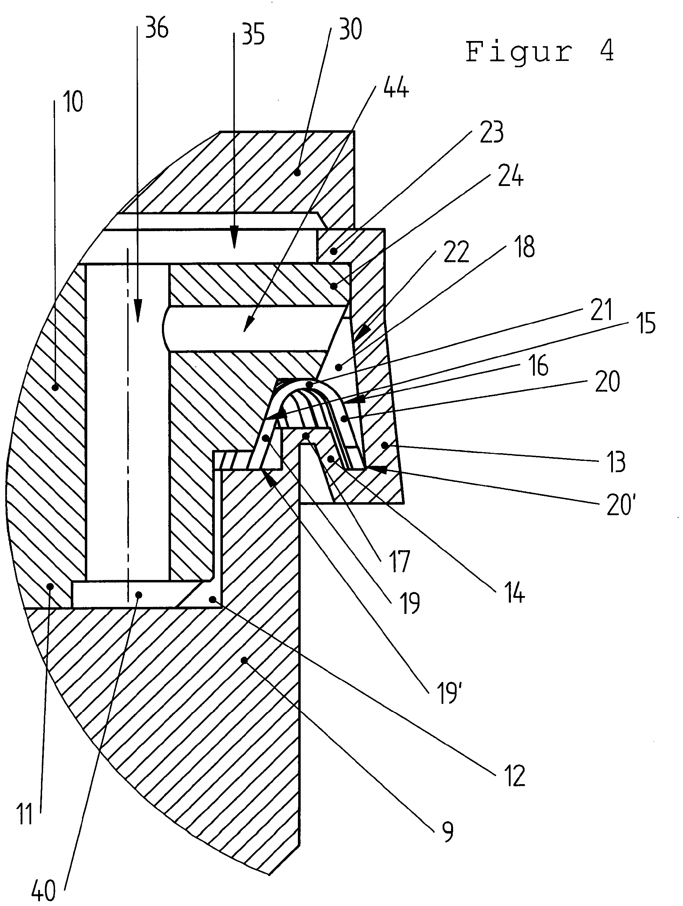

Bei der gezeigten bevorzugten Ausführungsform erstreckt sich der Ringraum 18 axial zum Hohlraum 35 hin über die Feder 16 hinaus und bietet dabei im Bereich dieser seiner Erstreckung die in den Fig. 2 bis 4 dargestellte Möglichkeit, zwischen dem Ringraum 18 und dem Durchlass 36 mindestens eine offene Verbindung 44 anzuordnen, die einen Durchtritt von Füllgut zur Öffnung 34 auch dann gewährleistet, wenn die Ausgestaltung der jeweiligen Feder 16 einen Durchtritt des Füllguts an ihr vorbei bzw. durch sie hindurch, wie dies bei der oben beschriebenen Feder 16 der Fall ist, nicht ermöglicht.

Diese offene Verbindung 44 ist zweckmäßig mindestens eine Bohrung.

Es könnten nämlich gegebenenfalls in Abhängigkeit von den im Einzelfall gewünschten Federcharakteristiken auch geschlossene Federn Verwendung finden, die ein Hindernis für den Durchtritt von Füllgut bilden können. In solchen Fällen stellt die offene und damit durchlässige Verbindung 44 sicher, dass im Falle einer Leckage der beschriebenen Art trotzdem ein Durchtritt von Füllgut zur Öffnung 34 erfolgen kann.

Damit wird gleichzeitig deutlich, dass es bei Vorhandensein der beschriebenen offenen Verbindung 44 einer weiteren Möglichkeit für einen Durchtritt von Füllgut zur Öffnung 34, wie sie als Ausführungsbeispiel weiter oben beschrieben wurde, nicht mehr bedarf, es genügt, wenn mindestens eine offene und damit durchlässige Verbindung 44 vorhanden ist. Diese kann entweder in der gezeigten Weise als durchgängige Verbindung zwischen Ringraum 18 und einem Durchlass 36 ausgebildet sein, oder auch als eine solche zwischen Ringraum 18 und direkt dem Hohlraum 35, mit dem bei der gezeigten Ausführungsform der Durchlass 36 bzw. die Durchlässe verbunden ist bzw. sind, beispielsweise mittels mindestens einer nicht gezeigten Schrägbohrung

Es versteht sich, dass auch der gewünschte Druckausgleich über die offene Verbindung 44 gewährleistet ist.

## Patentansprüche

1. Kolben (1) für eine Dosierpumpe (2) zum Dosieren von fließfähigem Füllgut, insbesondere Nahrungsmitteln unter sterilen Bedingungen, in Form einer Kolben-Zylinder-Einheit, bestehend aus dem Kolben (1), einer koaxialen metallischen Kolbenstange (4) und einem Zylinder (3), wobei der Kolben (1) einen metallischen Kolbenkern, vorzugsweise aus Edelstahl, als Innenteil (10) und eine radial erweiterte Kolbenführung (5) als Außenteil (9) aufweist, der einen kegelstumpfförmigen Bund (5') aus Kunststoff mit einer ringförmigen Dichtlippe (6) besitzt, die mit ihrem größten Durchmesser an der Zylinderinnenfläche (7) des Zylinders (3) der Kolben-Zylinder-Einheit hermetisch abdichtend hin und her zu gleiten bestimmt ist, wobei der die Dichtlippe (6) aufweisende Bereich des Außenteils (9) unter Zwischenlage einer Feder den Innenteil (10) umgibt,
**dadurch gekennzeichnet,**
**dass** die Kolbenstange (4) eine koaxiale Durchbrechung (32) aufweist, die in der Kolbenstange (4) als Kanal (33) zu einer in Abstand vom Kolben (1) angeordneten Öffnung (34) zum Außenbereich hin führt,
**dass** diese Durchbrechung (32) mit einem radialen Hohlraum (35) zwischen Innenteil (10) und Außenteil (9) des Kolbens (1) verbunden ist, der seinerseits mit einem an die Dichtlippe (6) angrenzenden Ringraum (18) in Verbindung steht, derart, dass einerseits ein Druckausgleich zwischen Ringraum (18) und Öffnung (34) stattfinden kann, und dass andererseits bei einem Undichtwerden der Dichtlippe (6) durch einen Riss in ihr selber oder in einer der an sie angrenzenden Wände (13, 14) oder durch ihren mit der Zeit auftretenden Verschleiß das fließfähige Füllgut über den Ringraum (18) und den Kanal (33) aus dessen Öffnung (34) austreten und sichtbar werden kann,
**dass** die Feder eine in dem Ringraum (18) angeordnete Feder (16) ist, und
**dass** der Kolben (1) zweistückig aus einem einen kegelstumpfförmigen Bund (Wand 13) und die Dichtlippe (6) aufweisenden und einen erweiterten Bereich (5) bildenden gesonderten Außenteil (9) aus Kunststoff und dem den Kolbenkern bildenden Innenteil (10) aus Metall besteht, vorzugsweise aus Edelstahl, an dem die Kolbenstange (4) koaxial angeordnet ist, welcher Innenteil (10) im Wesentlichen kegelstumpfförmig ausgebildet ist und der mit seinem im Durchmesser kleineren Ende (11) voran in eine ihn aufnehmende rotationssymmetrische Ausnehmung (12) des Außenteils (9) eingesetzt ist, derart, dass die Möglichkeit der Austauschbarkeit des gesonderten Außenteils (9) bei Weiterverwendbarkeit des Innenteils (10) gegeben ist.

2. Kolben (1) nach Anspruch 1,
**dadurch gekennzeichnet,**
**dass** die Ausnehmung (12) unter Bildung auch des Hohlraums (35) und des Ringraums (18) derart ausgehöhlt ist, dass die an die Dichtlippe (6) angrenzenden und den Ringraum (18) nach außen abschließenden Bereiche des Außenteils (9) eine im Wesentlichen axiale Wand (13) und eine im Wesentlichen radiale Wand (14) bilden, und wobei diese beiden Wände (13, 14) derart flexibel sind, dass die Dichtlippe (6) unter der Wirkung der in der zum Ringraum (18) gehörenden Ausnehmung (12) zwischen der an die Dichtlippe (6) angrenzenden axialen Wand (13) des Außenteils (9) und einer kegelstumpfförmigen Ringwandfläche (15) des Innenteils (10) einspannbaren Feder (16) radial sowohl nach außen vorspannbar als auch beim Einsetzen des Kolbens (1) in den Zylinder (3) der Kolben-Zylinder-Einheit unter der verengenden Wirkung der Zylinderinnenfläche (7) radial nach innen federnd nachgiebig ist.

3. Kolben (1) nach Anspruch 2,
**dadurch gekennzeichnet,**
**dass** die sich radial erstreckende Wand (14) mindestens eine in Umfangrichtung umlaufende, sich in die Ausnehmung (12) hinein erstreckende und radial flexible Falte (17) aufweist, die nach Art eines Faltenbalges einer radialen Bewegung der Dichtlippe (6) dient.

4. Kolben nach Anspruch 2 oder 3,
**dadurch gekennzeichnet,**
**dass** die Feder (16) in dem einen Teil derAusnehmung (12) bildenden Ringraum (18) zwischen Innenteil (10) und Außenteil (9) angeordnet ist,
**dass** die Feder (16) eine Ringfeder (16) ist und einen umgekehrt U-förmigen axialen Querschnitt mit radial inneren Stegen (19) und radial äußeren Stegen (20) und Stegverbindungen (21) aufweist,
**dass** die radial inneren Stege (19) an der kegelstumpfförmigen Ringwandfläche (15) des Innenteils (10) und die radial äußeren Stege (20) an einer im Wesentlichen axial verlaufenden und an die Dichtlippe (6) angrenzenden ringförmigen Innenfläche (22) der axialen Wand (13) des Außenteils (9) angreifen, und
**dass** die Vorspannung der Feder (16) durch koaxiale Verlagerung des Innenteils (10) in das Außenteil (9) hinein erzeugbar ist.

5. Kolben nach einem der vorhergehenden Ansprüche,
**dadurch gekennzeichnet,**
**dass** die Feder (16) mindestens einen Durchgang (41) aufweist, derart, dass bei einem Undichtwerden der Dichtlippe (6) ein Durchtritt des Füllguts zum mindestens einen Durchlass (36) zwischen Hohlraum (35) und einem Anschlusskanal (40) zum Ringraum (18) gewährleistet ist.

6. Kolben nach Anspruch 5,
**dadurch gekennzeichnet,**
**dass** die Feder (16) in Umfangsrichtung zwei einander gegenüberliegende und einen Abstand (T) voneinander aufweisende Enden (41, 42) besitzt, wobei der Abstand (T) ebenfalls einen Durchgang bildet.

7. Kolben nach Anspruch 4,
**dadurch gekennzeichnet,**
**dass** die Stege (19, 20) der Feder (16) zu ihren Rändern (19', 20') hin mit einer Spreizung versehen sind, wobei nur die Ränder (20') der radial äußeren Stege (20) an der Innenfläche (22) der axialen Wand (13) anliegen und dabei Linienberührung aufweisen, während die radial inneren Stege (19) flächig an der kegelstumpfförmigen Ringwandfläche (15) des Innenteils (10) anliegen.

8. Kolben nach Anspruch 2,
**dadurch gekennzeichnet,**
**dass** durch Veränderung der Geometrien der kegelstumpfförmigen Ringwandfläche (15) und einer Bundfläche (15') am Innenteil (10), welche Druck von oben auf die Feder (16) bzw. deren Stegverbindungen (21) ausübt, ohne Tausch der Feder (16) die Federspannung veränderbar ist.

9. Kolben nach einem der vorhergehenden Ansprüche,
**dadurch gekennzeichnet,**
**dass** das Außenteil (9) am oberen Rand seiner Ausnehmung (12) einen radial nach innen vorstehenden Bund (23) aufweist, der beim Einsetzen des Innenteils (10) in die Ausnehmung (12) aufweitbar ist, derart, dass der Bund (23) nach dem Einsetzen des Innenteils (10) über dessen oberen Rand (24) schnappbar ist und das Innenteil (10) im Außenteil (9) hält.

10. Kolben nach einem der vorhergehenden Ansprüche,
**dadurch gekennzeichnet,**
**dass** Innenteil (10) und Außenteil (9) mittels mindestens einer Verschraubung miteinander verbunden sind.

11. Kolben nach Anspruch 10,
**dadurch gekennzeichnet,**
**dass** die Verschraubung eine zentrale Schraube (25) aufweist, welche das Innenteil (10) durchdringt, mit ihrem Kopf (26) in einer Eintiefung (27) des Innenteils (10) anliegt und mit ihrem Gewindeteil (28) in ein koaxiales Sackgewinde (29) des Außenteils (9) eingeschraubt ist.

12. Kolben nach Anspruch 1,
**dadurch gekennzeichnet,**
**dass** die Kolbenstange (4) eine koaxiale Endplatte (30) aufweist, die mit dem Innenteil (10) fest verbunden ist.

13. Kolben nach Anspruchen 12,
**dadurch gekennzeichnet,**
**dass** die Verbindung aus mindestens einer Verschraubung (31) besteht.

14. Kolben nach Anspruch 12,
**dadurch gekennzeichnet,**
**dass** der Hohlraum (35) zwischen Endplatte (30), Bund (23) des Außenteils (9) und Innenteil (10) ausgebildet ist und im Innenteil (10) mindestens ein Durchlass (36) zwischen diesem Hohlraum (35) und mindestens einem Anschlusskanal (40) in einer Stirnseite (10a) des Innenteils (10) vorgesehen ist, welcher Anschlusskanal (40) auf diese Weise mit der Öffnung (34) verbunden ist, derart, dass ein Durchlass zwischen dem Ringraum (18), der Ausnehmung (12) und der Öffnung (34) an der Feder (16) vorbei vorhanden ist.

15. Kolben nach Anspruch 2,
**dadurch gekennzeichnet,**
**dass** Außenteil (9) und Innenteil (10) sich nur in zwei Bereichen berühren, nämlich zum einen im Bereich der Endfläche (10a) des Innenteils (10), die an der inneren Endfläche (9a) des Außenteils (9) anliegt, und zum anderen im Bereich des Bundes (23) des Außenteiles (9), der den oberen Rand (24) des lnnenteils (10) übergreift, wobei zwischen diesen beiden Bereichen das Außenteil (9) und das Innenteil (10) einen Abstand voneinander wahren, welcher eine offene Verbindung zwischen dem Ringraum (18) und der Öffnung (34) an der Feder (16) vorbei sicherstellt.

16. Kolben (1) nach Anspruch 1,
**dadurch gekennzeichnet,**
**dass** sich der Ringraum (18) axial zum Hohlraum (35) hin über die Höhe der Feder (16) hinaus erstreckt und zwischen dem Ringraum (18) und dem mindestens einen Durchlass (36) mindestens eine offene Verbindung (44) angeordnet ist, die einen Durchtritt von Füllgut zur Öffnung (34) auch dann gewährleistet, wenn die Ausgestaltung der jeweiligen Feder (16) einen Durchtritt des Füllguts an ihr vorbei bzw. durch sie hindurch nicht ermöglicht.

17. Kolben (1) nach Anspruch 16,
**dadurch gekennzeichnet,**
**dass** die offene Verbindung (44) mindestens eine Bohrung ist.

## Claims

1. Piston (1) for a dosing pump (2) for dosing free-flowing filler material, in particular foods under sterile conditions, in the form of a piston-cylinder unit composed of the piston (1), a coaxial metallic piston rod (4) and a cylinder (3), wherein the piston (1) has a metallic piston core, preferably of stainless steel, as inner part (10), and a radially widened piston guide (5) as outer part (9), which has a frustoconical collar (5') made of plastic with an annular sealing lip (6) which, with its greatest diameter, is intended to slide to and fro in a hermetically sealing manner on the cylindrical inner surface (7) of the cylinder (3) of the piston-cylinder unit, wherein the area of the outer part (9) having the sealing lip (6) surrounds the inner part (10) with interposition of a spring,
**characterized in that**
the piston rod (4) has a coaxial passageway (32) which extends in the piston rod (4) as a channel (33) to an opening (34) arranged at a distance from the piston (1) and leading to the outside, this passageway (32) is connected to a radial cavity (35) between inner part (10) and outer part (9) of the piston (1), which cavity (35) for its part communicates with an annular space (18) adjoining the sealing lip (6), in such a way that, on the one hand, a pressure compensation can take place between annular space (18) and opening (34) and, on the other hand, if the sealing lip (6) loses its leaktightness as a result of a tear in it or in one of the walls (13, 14) adjoining it, or as a result of its becoming worn over time, the free-flowing filler material can leave through the annular space (18) and the channel (33) from the opening (34) thereof and become visible,
the spring is a spring (16) arranged in the annular space (18), and
the piston (1) is in two parts, namely a separate outer part (9) made of plastic and having a frustoconical collar (wall 13) and the sealing lip (6) and forming a widened area (5), and the inner part (10) made of metal, preferably of stainless steel, which forms the piston core and on which the piston rod (4) is coaxially arranged, which inner part (10) has a substantially frustoconical shape and is inserted, with its end (11) of smaller diameter to the front, into a rotationally symmetrical recess (12) receiving it in the outer part (9), in such a way that there is the possibility of being able to exchange the separate outer part (9) while being able to reuse the inner part (10).

2. Piston (1) according to Claim 1,
**characterized in that**
the recess (12), also forming the cavity (35) and the annular space (18), is hollowed out in such a way that the areas of the outer part (9) that adjoin the sealing lip (6) and close off the annular space (18) from the outside form a substantially axial wall (13) and a substantially radial wall (14), wherein these two walls (13, 14) are flexible in such a way that the sealing lip (6), under the action of the spring (16) which can be clamped in the recess (12) belonging to the annular space (18) and arranged between the axial wall (13) of the outer part (9) adjoining the sealing lip (6) and a frustoconical annular wall surface (15) of the inner part (10), can be pretensioned radially outwards and, upon insertion of the piston (1) into the cylinder (3) of the piston-cylinder unit, also yields resiliently in the radially inward direction under the constricting action of the cylindrical inner surface (7).

3. Piston (1) according to Claim 2,
**characterized in that**
the radially extending wall (14) has at least one radially flexible fold (17) which runs in the circumferential direction and extends into the recess (12) and which, in the manner of a bellows, serves to provide a radial movement of the sealing lip (6).

4. Piston according to Claim 2 or 3,
**characterized in that**
the spring (16) is arranged between inner part (10) and outer part (9) in the annular space (18) forming a part of the recess (12),
the spring (16) is an annular spring (16) and has an inverted U-shaped axial cross section with radially inner webs (19) and radially outer webs (20) and web connections (21),
the radially inner webs (19) engage on the frustoconical annular wall surface (15) of the inner part (10), and the radially outer webs (20) engage on an annular inner surface (22), of the axial wall (13) of the outer part (9), extending substantially axially and adjoining the sealing lip (6), and
the pretensioning of the spring (16) can be generated by moving the inner part (10) coaxially into the outer part (9).

5. Piston according to one of the preceding claims,
**characterized in that**
the spring (16) has at least one passage (41), in such a way that, if the sealing lip (6) loses its leaktightness, movement of the filler material is ensured to the at least one passage (36) between cavity (35) and a connecting channel (40) to the annular space (18).

6. Piston according to Claim 5,
**characterized in that**
the spring (16) has, in the circumferential direction, two ends (41, 42) lying opposite each other and at a distance (T) from each other, wherein the distance (T) likewise forms a passage.

7. Piston according to Claim 4,
**characterized in that**
the webs (19, 20) of the spring (16) are provided with a spread towards their edges (19', 20'), wherein only the edges (20') of the radially outer webs (20) bear on the inner surface (22) of the axial wall (13) and in so doing have a linear contact, whereas the radially inner webs (19) bear flat on the frustoconical annular wall surface (15) of the inner part (10).

8. Piston according to Claim 2,
**characterized in that,**
by changing the geometries of the frustoconical annular wall surface (15) and of a flange surface (15') on the inner part (10), which flange surface (15') applies pressure from above onto the spring (16) or onto the web connections (21) of the latter, the spring tensioning can be modified without exchanging the spring (16).

9. Piston according to one of the preceding claims,
**characterized in that**
the outer part (9), at the upper edge of its recess (12), has a radially inwardly protruding ) collar (23) which, upon insertion of the inner part (10) into the recess (12), can be widened in such a way that the collar (23) can be snapped into place over the upper edge (24) of the inner part (10), after insertion of the latter, and holds the inner part (10) in the outer part (9).

10. Piston according to one of the preceding claims,
**characterized in that**
inner part (10) and outer part (9) are connected to each other by means of at least one screwed union.

11. Piston according to Claim 10,
**characterized in that**
the screwed union has a central screw (25), which extends through the inner part (10), lies with its head (26) in a depression (27) of the inner part (10), and is screwed with its threaded part (28) into a coaxial blind-hole thread (29) of the outer part (9).

12. Piston according to Claim 1,
**characterized in that**
the piston rod (4) has a coaxial endplate (30), which is fixedly connected to the inner part (10).

13. Piston according to Claim 12,
**characterized in that**
the connection is formed by at least one screwed union (31).

14. Piston according to Claim 12,
**characterized in that**
the cavity (35) is formed between the endplate (30), the collar (23) of the outer part (9) and the inner part (10), and at least one passage (36) is provided in the inner part (10), between this cavity (35) and at least one connecting channel (40) in an end face (10a) of the inner part (10), ) which connecting channel (40) is thereby connected to the opening (34) in such a way that a passage past the spring (16) is present between the annular space (18), the recess (12) and the opening (34).

15. Piston according to Claim 2,
**characterized in that**
outer part (9) and inner part (10) touch only in two areas, namely, on the one hand, in the area of the end face (10a) of the inner part (10) bearing on the inner end face (9a) of the outer part (9), and, on the other hand, in the area of the collar (23) of the outer part (9) engaging over the upper edge (24) of the inner part (10), wherein the outer part (9) and the inner part (10) maintain a distance from each other between these two areas, which distance ensures an open connection past the spring (16) between the annular space (18) and the opening (34).

16. Piston (1) according to Claim 1,
**characterized in that**
the annular space (18) extends axially with respect to the cavity (35) over the height of the spring (16) and, between the annular space (18) and the at least one passage (36), at least one open connection (44) is arranged which also ensures that filler material passes to the opening (34) when the configuration of the respective spring (16) does not allow the filler material to run past it or through it.

17. Piston (1) according to Claim 16,
**characterized in that**
the open connection (44) is at least one bore.

## Revendications

1. Piston (1) pour une pompe de dosage (2) pour le dosage de matière de remplissage fluide, en particulier de produits alimentaires, dans des conditions stériles, sous la forme d'une unité cylindre-piston, constituée du piston (1), d'une tige de piston métallique coaxiale (4) et d'un cylindre (3), le piston (1) présentant un noyau de piston métallique, de préférence en acier inoxydable, en tant que partie intérieure (10), et un guide de piston (5) élargi radialement en tant que partie extérieure (9), qui possède un épaulement de forme tronconique (5') en plastique ayant une lèvre d'étanchéité annulaire (6) qui est prévue pour se déplacer en va et vient en glissant de manière hermétique avec son plus grand diamètre contre la surface intérieure (7) du cylindre (3) de l'unité cylindre-piston, la région de la partie extérieure (9) présentant la lèvre d'étanchéité (6) entourant la partie intérieure (10) avec interposition d'un ressort,
**caractérisé en ce que**
la tige de piston (4) présente un orifice coaxial (32) qui conduit dans la tige de piston (4) sous forme de canal (33) jusqu'à une ouverture (34) disposée à distance du piston (1) vers la région extérieure,
**en ce que** cet orifice (32) est connecté à une cavité radiale (35) entre la partie intérieure (10) et la partie extérieure (9) du piston (1), qui est pour sa part en liaison avec un espace annulaire (18) adjacent à la lèvre d'étanchéité (6) de telle sorte que d'une part un équilibre de pression puisse s'établir entre l'espace annulaire (18) et l'ouverture (34), et que d'autre part, en cas de défaut d'étanchéité de la lèvre d'étanchéité (6), en raison d'une fissure dans celle-ci proprement dite ou dans l'une des parois (13, 14) qui lui sont adjacentes ou en raison de son usure causée par le vieillissement, la matière de remplissage fluide puisse sortir par le biais de l'espace annulaire (18) et du canal (33) hors de son ouverture (34) et être visible,
**en ce que** le ressort est un ressort (16) disposé dans l'espace annulaire (18), et
**en ce que** le piston (1) est constitué en deux parties, d'une partie extérieure séparée (9) en plastique présentant un épaulement de forme tronconique (paroi 13) et la lèvre d'étanchéité (6) et formant une région élargie (5), et de la partie intérieure (10) en métal formant le noyau de piston, de préférence en acier inoxydable, au niveau de laquelle est disposée coaxialement la tige de piston (4), laquelle partie intérieure (10) est réalisée essentiellement sous forme tronconique et est insérée avec son extrémité (11) de plus petit diamètre en avant dans un évidement (12) à symétrie de révolution de la partie extérieure (9) la recevant, de telle sorte que qu'il soit possible de remplacer la partie extérieure séparée (9) tout en pouvant réutiliser la partie intérieure (10).

2. Piston (1) selon la revendication 1,
**caractérisé en ce que**
l'évidement (12) est creusé en formant également la cavité (35) et l'espace annulaire (18) de telle sorte que les régions de la partie extérieure (9) adjacentes à la lèvre d'étanchéité (6) et fermant vers l'extérieur l'espace annulaire (18) forment une paroi essentiellement axiale (13) et une paroi essentiellement radiale (14), et ses deux parois (13, 14) étant flexibles dans une mesure telle que la lèvre d'étanchéité (6) puisse être précontrainte radialement et vers l'extérieur sous l'effet du ressort (16) pouvant être serré dans l'évidement (12) appartenant à l'espace annulaire (18) entre la paroi axiale (13) de la partie extérieure (9) adjacente à la lèvre d'étanchéité (6) et une surface de paroi annulaire (15) de forme tronconique de la partie intérieure (10), et soit également flexible élastiquement radialement vers l'intérieur lors de l'insertion du piston (1) dans le cylindre (3) de l'unité cylindre-piston sous l'effet de rétrécissement de la surface intérieure du cylindre (7).

3. Piston (1) selon la revendication 2,
**caractérisé en ce que**
la paroi (14) s'étendant radialement présente au moins un pli (17) sur le pourtour dans la direction périphérique, s'étendant à l'intérieur de l'évidement (12) et radialement flexible, qui, à la manière d'un soufflet, sert au déplacement radial de la lèvre d'étanchéité (6).

4. Piston selon la revendication 2 ou 3,
**caractérisé en ce que**
le ressort (16) est disposé entre la partie intérieure (10) et la partie extérieure (9) dans l'espace annulaire (18) formant une partie de l'évidement (12),
**en ce que** le ressort (16) est un ressort annulaire (16) et présente une section transversale axiale en forme de U inversé avec des nervures radialement internes (19) et des nervures radialement externes (20) et des connexions de nervures (21),
**en ce que** les nervures radialement internes (19) viennent en prise au niveau de la surface de paroi annulaire de forme tronconique (15) de la partie intérieure (10) et les nervures radialement externes (20) viennent en prise au niveau d'une surface intérieure (22) de forme annulaire de la paroi axiale (13) de la partie extérieure (9) s'étendant essentiellement axialement et adjacente à la lèvre d'étanchéité (6), et
**en ce que** la précontrainte du ressort (16) peut être générée par un déplacement coaxial de la partie intérieure (10) dans la partie extérieure (9).

5. Piston selon l'une quelconque des revendications précédentes,
**caractérisé en ce que**
le ressort (16) présente au moins un passage (41) de telle sorte que dans le cas d'un défaut d'étanchéité de la lèvre d'étanchéité (6), un passage de la matière de remplissage vers l'au moins un passage (36) entre la cavité (35) et un canal de raccordement (40) vers l'espace annulaire (18) soit garanti.

6. Piston selon la revendication 5,
**caractérisé en ce que**
le ressort (16) possède, dans la direction périphérique, deux extrémités (41, 42) opposées l'une à l'autre et présentant une distance (T) l'une de l'autre, la distance (T) formant également un passage.

7. Piston selon la revendication 4,
**caractérisé en ce que**
les nervures (19, 20) du ressort (16) sont pourvues vers leurs bords (19', 20') d'un écartement, seuls les bords (20') des nervures radialement externes (20) s'appliquant contre la surface intérieure (22) de la paroi axiale (13) et présentant en l'occurrence un contact linéaire, tandis que les nervures radialement internes (19) s'appliquent à plat contre la surface de paroi annulaire de forme tronconique (15) de la partie intérieure (10).

8. Piston selon la revendication 2,
**caractérisé en ce que**
par modification des géométries de la surface de paroi annulaire de forme tronconique (15) et d'une surface d'épaulement (15') au niveau de la partie intérieure (10), qui exerce une pression par le haut sur le ressort (16) ou sur ses connexions de nervures (21), la contrainte de ressort peut être modifiée sans remplacement du ressort (16).

9. Piston selon l'une quelconque des revendications précédentes,
**caractérisé en ce que**
la partie extérieure (9) présente, au niveau du bord supérieur de son évidement (12), un épaulement (23) faisant saillie radialement vers l'intérieur, qui, lors de l'insertion de la partie intérieure (10) dans l'évidement (12), peut être écarté de telle sorte que l'épaulement (23), après l'insertion de la partie intérieure (10), puisse s'encliqueter par-dessus son bord supérieur (24) et maintienne la partie intérieure (10) dans la partie extérieure (9).

10. Piston selon l'une quelconque des revendications précédentes,
**caractérisé en ce que**
la partie intérieure (10) et la partie extérieure (9) sont connectées l'une à l'autre au moyen d'au moins un vissage.

11. Piston selon la revendication 10,
**caractérisé en ce que**
le vissage présente une vis centrale (25) qui traverse la partie intérieure (10), qui s'applique avec sa tête (26) dans un renfoncement (27) de la partie intérieure (10) et qui est vissée avec sa partie filetée (28) dans un filetage coaxial borgne (29) de la partie extérieure (9).

12. Piston selon la revendication 1,
**caractérisé en ce que**
la tige de piston (4) présente une plaque d'extrémité coaxiale (30) qui est connectée fixement à la partie intérieure (10).

13. Piston selon la revendication 12,
**caractérisé en ce que**
la connexion se compose d'au moins un vissage (31).

14. Piston selon la revendication 12,
**caractérisé en ce que**
la cavité (35) est réalisée entre la plaque d'extrémité (30), l'épaulement (23) de la partie extérieure (9) et la partie intérieure (10) et au moins un passage (36) entre cette cavité (35) et au moins un canal de raccordement (40) dans un côté frontal (10a) de la partie intérieure (10) est prévu dans la partie intérieure (10), lequel canal de raccordement (40) est connecté de cette manière à l'ouverture (34) de telle sorte qu'un passage soit prévu entre l'espace annulaire (18), l'évidement (12) et l'ouverture (34) devant le ressort (16).

15. Piston selon la revendication 2,
**caractérisé en ce que**
la partie extérieure (9) et la partie intérieure (10) sont uniquement en contact dans deux régions, à savoir d'une part dans la région de la surface d'extrémité (10a) de la partie intérieure (10), qui s'applique contre la surface d'extrémité intérieure (9a) de la partie extérieure (9), et d'autre part dans la région de l'épaulement (23) de la partie extérieure (9) qui vient en prise par le dessus avec le bord supérieur (24) de la partie intérieure (10), la partie extérieure (9) et la partie intérieure (10), entre ces deux régions, assurant un espacement entre elles, lequel garantit une connexion ouverte entre l'espace annulaire (18) et l'ouverture (34) devant le ressort (16).

16. Piston (1) selon la revendication 1,
**caractérisé en ce que**
l'espace annulaire (18) s'étend axialement vers la cavité (35) au-delà de la hauteur du ressort (16) et au moins une connexion ouverte (44) est disposée entre l'espace annulaire (18) et l'au moins un passage (36), laquelle connexion ouverte garantit un passage de la matière de remplissage vers l'ouverture (34) également lorsque la configuration du ressort respectif (16) ne permet pas un passage de la matière de remplissage devant celui-ci ou à travers celui-ci.

17. Piston (1) selon la revendication 16,
**caractérisé en ce que**
la connexion ouverte (44) est au moins un alésage.
